# EUROPEAN PATENT APPLICATION

(11) **EP 1 783 680 A2**
(43) Date of publication of application: **09.05.2007**
(21) Application number: 06123542.0
(22) Date of filing: 06.11.2006
(51) Int. Cl.: G06T 1/00

(54) **Apparatus and method for frame acquisition rate control in an in-vivo imaging device**

(30) Priority: 07.11.2005 US 267173
(71) Applicant: Given Imaging Limited, 20692 Yoqneam llite (IL)
(72) Inventor: Horn, Eli, 26315, Kiryat Motzkin (IL); Krupnik, Hagai, 36001, Nofit (IL)
(74) Representative: Harrison Goddard Foote

(57) **Abstract**

An in-vivo imaging system and a method for operation. The system may include an in-vivo imaging device having a light source and an imager, and a processor to process a control signal produced based on two or more images captured by the imager and to use the control signal to adjust the timing of the imaging of the imager. The processor may be an integral part of an external unit, or may be an integral part of the in-vivo imaging device.

## Description

### BACKGROUND OF THE INVENTION

Devices and methods for performing in-vivo imaging of passages or cavities within a body are well known in the art. Such devices may include, inter alia, various endoscopic imaging systems and devices, for example, an in-vivo capsule, for performing imaging in various internal body cavities.

While traveling inside the body, the imaging device may capture images of, for example, surfaces of the intestine and may transfer the captured images at a fixed frame rate, continuously, to an image recorder outside the body to be analyzed by a physician. The device may move unevenly inside the passages or cavities of the body. For example, an in-vivo capsule passing through a gastrointestinal (GI) tract may be moving "slowly" in some part of the GI tract, and at some point of time and/or position may start to move "rapidly". If the in-vivo device is capturing images at a fixed time interval, a physician performing diagnosis of the patient may experience receiving undesirably less images for that part of the GI tract as a result of this sudden change in the movement of capsule.

Various methods may be used to control the rate of images being captured by the imaging device and/or transferred to a receiver or recorder. Such methods may include for example manually sending a control signal to the imaging device to increase or decrease the rate of image capturing and the corresponding rate of frames being sent by the device.

However, an in-vivo imaging device performing image capturing of, for example, the GI tract may not always be monitored real time by a person, such as, for example a physician. The entire process of image capturing may be automatically recorded in an image recorder before image processing and/or image enhancement may be conducted on the recorded images. In addition, even if the process is real time monitored, it may often be too late for any human intervention to adjust the rate of image capturing when the device has already started changing its movement.

### SUMMARY OF THE INVENTION

Embodiments of the present invention may provide an apparatus and method for adjusting the rate of image capturing or frame transmission in real time and for example automatically, in an in-vivo imaging device wherein the movement of the device may be at a variable rate or the movement pattern of the device may be altered. For example, movement may be affected from time to time by factors such as internal pressure and the structure of passages and/or cavities, of the body.

Embodiments of the invention provide an in-vivo imaging device having a controller, wherein the controller is configured to, for example, during a cycle of image capturing, operate a light source and an imager to capture at least two images, process the two images, and adjust the cycle of image capturing in such a manner that, for example, the image frames captured and/or the stream of image frames captured may image the substantially entire area of interest, for example, substantially the entire GI tract or designated areas of the GI tract without human intervention, regardless of changes in the moving speed of the imaging device.

### BRIEF DESCRIPTION OF THE DRAWINGS

The invention will be understood and appreciated more fully from the following detailed description of various embodiments of the invention, taken in conjunction with the accompanying drawings of which:
FIG. 1 is a conceptual illustration of an in-vivo imaging system according to one embodiment of the invention;
FIG. 2 is a simplified block diagram illustration of an in-vivo imaging device according to one embodiment of the invention;
FIG. 3 is a schematic diagram illustration of an in-vivo imaging device making a brief movement along a GI tract of a human body according to one embodiment of the invention;
FIG. 4 is a schematic illustration of the timing of an illumination and image acquisition process in an in-vivo imaging device having implemented a frame rate control mechanism according to one embodiment of the invention;
FIG. 5 is a schematic illustration of the timing of an illumination and image acquisition process in an in-vivo imaging device having implemented a frame rate control mechanism according to another embodiment of the invention;
FIG. 6 is a schematic illustration of the timing of an illumination and image acquisition process in an in-vivo imaging device having implemented a frame rate control mechanism according to yet another embodiment of the invention;
FIGS. 7A and 7B are schematic views of a group of pixels of an imaging unit having implemented a frame rate control mechanism according to one embodiment of the invention;
FIG. 8 is a simplified flowchart illustration of a method of performing frame rate control by an in-vivo imaging device with pre-flash illumination according to one embodiment of the invention;
FIG. 9 is a simplified flowchart illustration of a method of performing frame rate control by an in-vivo imaging device with post-flash illumination according to another embodiment of the invention; and
FIG. 10 is a simplified flowchart illustration of a method of performing frame rate control by an in-vivo imaging device according to yet another embodiment of the invention.

It will be appreciated that for simplicity and clarity of illustration, elements shown in the figures have not necessarily been drawn to scale. For example, the dimensions of some of the elements may be exaggerated relative to other elements for clarity.

### DETAILED DESCRIPTION OF THE INVENTION

Various embodiments of the present invention are described herein. For the purpose of explanation, specific configurations and details may be set forth in order to provide a thorough understanding of the present invention. However, it will be apparent to person skilled in the art that the present invention may be practiced without the specific details presented herein. Furthermore, well known features may be omitted or simplified in order not to obscure the present invention.

Certain basic aspects and operational procedures used in embodiments of the present invention may be described in co-pending US patent application Serial No. 10/202,608, filed July 25, 2002 and published June 26, 2003 under publication number US-2003-0117491-A1, in co-pending US patent application Serial No. 09/800,470, filed March 8, 2001 and published November 1, 2001 under publication number US-2001-0035902-A1, and/or in US patent 5,604,531 to Iddan et al. The disclosures of the above applications and patent are incorporated herein by reference in their entirety.

It is noted that while embodiments of the invention described herein are adapted for imaging of the gastrointestinal (GI) tract, the devices and methods disclosed herein may be adapted for imaging other body cavities or spaces.

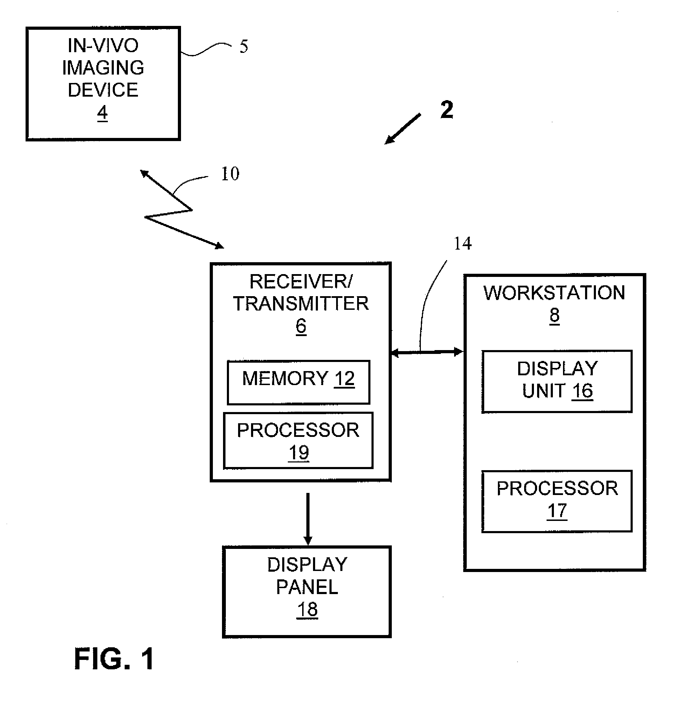

FIG. 1 is a conceptual illustration of an in-vivo imaging system adapted to adjust an image acquisition and frame transmission rate according to one exemplary embodiment of the invention. System 2, as shown in FIG. 1, may include an in-vivo imaging device 4 and an external receiver/transmitter module or unit 6. System 2 may also include a separate computing unit such as a personal computer or workstation 8 and a display panel 18.

According to one embodiment of the invention, device 4 may typically be or may include an autonomous, swallowable, oblong, oval, or spherical capsule, but device 4 may have other shapes and need not be swallowable or autonomous.

Embodiments of device 4 are typically autonomous, and are typically self-contained. For example, device 4 may be a capsule or other unit where all the components, for example, an imager, illumination units, power units, control units, and transmitting/receiving units, may be substantially contained or sealed within the device body in a container or shell 5, wherein the container or shell 5 may include more than one piece. Device 4 may not require any wires or cables to, for example, receive power or transmit data. Device 4 may include a transmitter/receiver to communicate with an external receiving/transmitting module, for example, receiver/transmitter 6, to provide data, control, or other functions. . The transmitter/receiver of device 4 may transmit image or other data from device 4 and may receive signals (e.g., a control signal) from the external receiver/transmitter. Power may be provided to device 4 by, for example, one or more internal batteries or through a wireless receiving system. Other embodiments may have other configurations and capabilities. For example, components may be distributed over multiple sites or units. Control information may be received from an external source.

As illustrated in the following description, imaging device 4, contained in container or shell 5, may be able to gather information, such as, for example, a stream of images of inner walls of body lumens while passing through inside of a body. The stream of images may be transmitted to a receiver/transmitter 6 outside the body via a wireless or hard-wired medium 10. Receiver/transmitter 6 may include a memory 12, and may be able to record information received from device 4 on memory 12. In addition, receiver/transmitter module 6 may include, for example, a processor 19 to process data received from device 4 and/or to generate control signals to be transmitted to device 4. Other suitable data or signals may be processed by processor 19. Optionally, receiver/transmitter 6 may include display panel 18 which may include an LCD, TFT, CRT, OLED or other suitable panels. In other words, display panel 18 may be integrated into receiver/transmitter 6. Receiver/transmitter 6 may be able to transfer received or recorded information to display 18 or to workstation 8 via, for example, a wireless or hard-wired medium 14, and may be able to do so while receiving/recording information from device 4.

Workstation 8 may include a processor 17 to process and/or present information received from receiver/transmitter 6 to an operator while device 4 is still inside the patient's body, and while receiver/transmitter 6 is still recording information gathered by device 4. For example, workstation 8 may include a display unit 16, and may be able to display the stream of images recorded in memory 12 on display unit 16. Display unit 16 may include an LCD, TFT, CRT, OLED or other suitable medium.

While moving along the GI tract of a body, imaging device 4 may acquire images at a predetermined or initial acquisition rate. For example, device 4 may acquire images at a rate of two frames per second (2 Hz). Other base rates may be used, for example, images may be acquired at a rare of 4 Hz or 7Hz. According to an exemplary embodiment of the invention, device 4 may also acquire certain "special" images and the special images may be processed, or partially processed, by device 4 to produce for example a control signal or a control parameter such as a frame rate control signal. Alternately, the special images may be sent to receiver/transmitter 6 and subsequently processed and/or analyzed by processor 19. The special images may be "control images" used to analyze the imaging process, and not used for display to a user. A control or adjustment signal such as a frame rate control signal may be sent to device 4 by receiver/transmitter module 6 to adjust the functioning of device 4 or may be generated within device 4 as described above. Alternately, the image acquisition rate may be adjusted automatically or manually by an expert or physician examining the image at workstation 8.

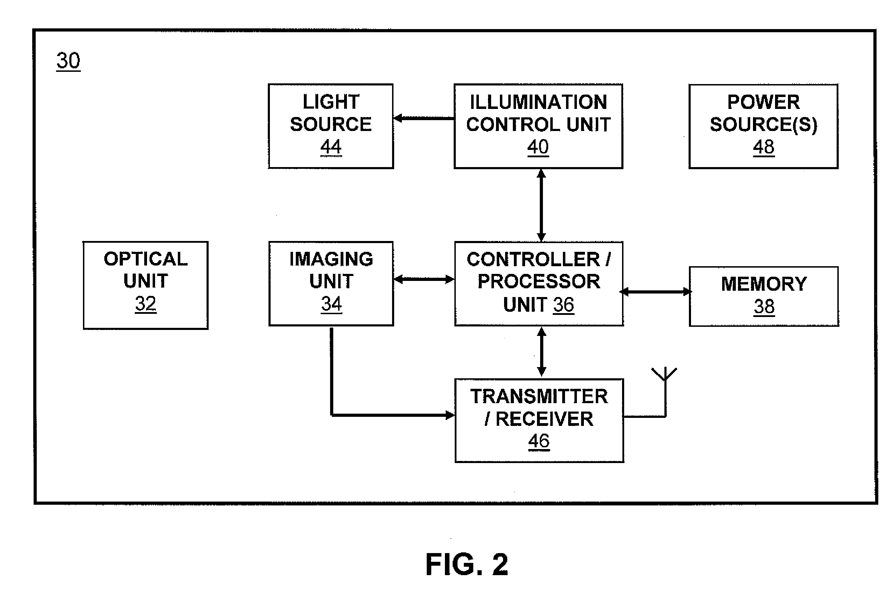

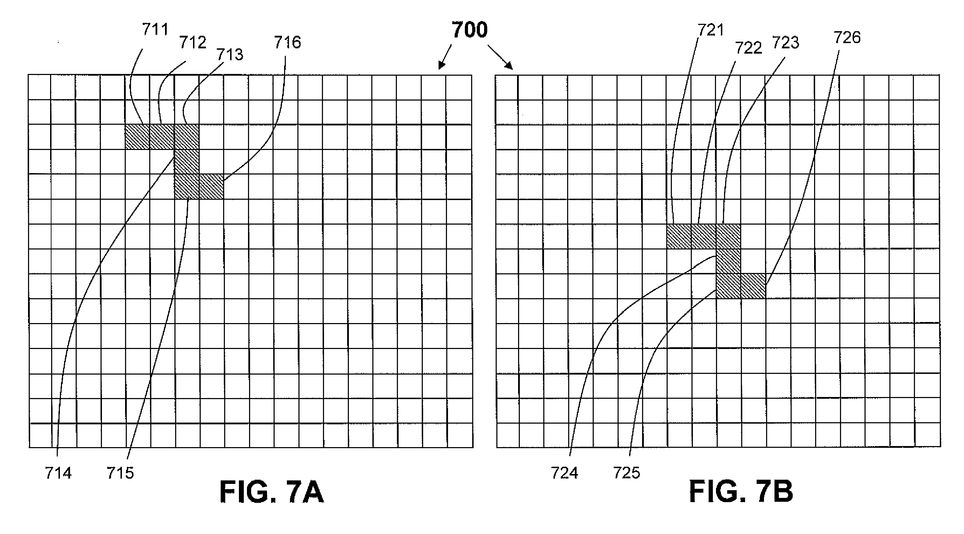

FIG. 2 is a simplified block diagram illustration of an in-vivo imaging device having a frame rate control system of image acquisition and transmission according to exemplary embodiment of the invention. Device 30, which may be similar to device 4 in FIG. 1, may include an imaging unit 34, for example, a CMOS imager adapted for capturing images of the GI tract through an optical unit 32. The images captured may include various images, for example "regular images" and "control images". A "regular image" may be for example an image captured and transmitted to the outside of a body to be displayed on, for example, display panel 18 and/or display unit 16 of workstation 8 (FIG. 1), for example, for diagnosis by a physician. A "control image" may be for example a special image captured for frame rate control purpose, and may not be recorded or displayed to a user. The control image may be captured by a subset or subgroup of pixels, as shown, for example, in FIG. 7 below, of imager or imaging unit 34 (FIG. 2) and may have different resolution from the regular image, and may not be displayed and/or suitably captured for display. Processor unit 36 and/or imaging unit 34 may process or analyze a set of control images to produce a control signal. Processor unit 36 may also be a controller to adjust parameters of the image acquisition process, such as the image acquisition and frame transmission rate based on the control signal. According to one embodiment of the invention, processor unit 36 may control the operation of imaging unit 34 and a transmitting/receiving unit 46 operatively connected to imaging unit 34 to transmit the captured control images to outside to be processed by processor 17 of workstation 8 or by receiver/transmitter 6 (FIG. 1). Receiver/transmitter 6, for example, may produce a control signal or otherwise alter the operating parameters of device 4. The control signal or parameter adjustment may include the rate of image acquisition, and/or framing and transmission of the acquired images. According to one embodiment of the invention, processor unit 36 may transmit the control images and regular images to an external receiver, on a same frame to save transmission power, or may transmit the images separately. According to an exemplary embodiment of the invention, processor 36 may save all or part of the control images in a memory 38 during the acquisition, processing, and/or transmission of the control images.

Device 30 may also include one or more light sources 44 that are suitably connected to an illumination control unit 40. Illumination control unit 40 may control the intensity, duration, and/or the number of illumination sources 44 used. Device 30 may further include one or more power sources 48.

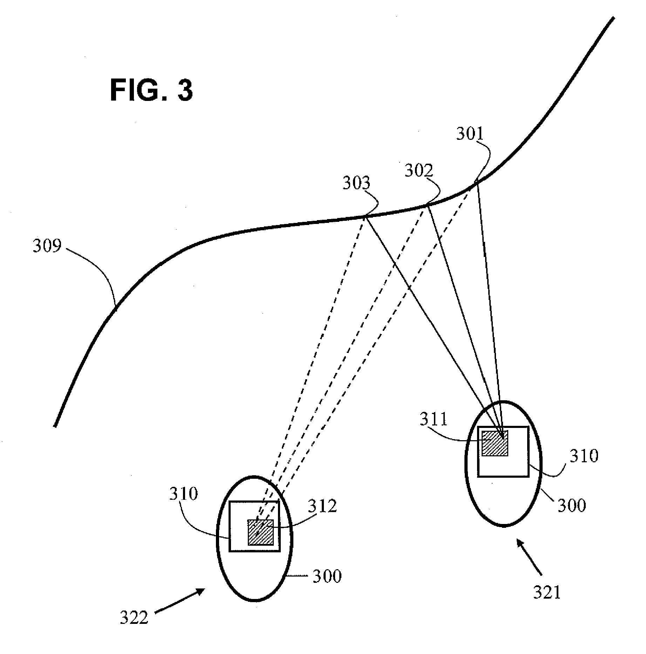

FIG. 3 is a schematic diagram illustration of an in-vivo imaging device making a brief movement along a GI tract of a human body according to one embodiment of the invention. Device 300 may briefly move from a position 321 to a position 322 along a GI tract 309. Images of GI tract 309, for example, at points 301, 302, and 303, may be captured in a pixel area 311 of an imaging sensor 310 when imaging device 300 is at position 321. Images of the same may be captured in a slightly different pixel area 312 of the same imaging sensor 310 at position 322 after device 300 make the brief movement. While in Fig. 3 device 300 is shown some distance from the lumen walls, in practice, the device in some applications may be pressed up against or surrounded by lumen walls or other tissue.

An averaged moving speed of imaging device 300, over a predetermined time interval during which the brief movement is made, may be estimated or calculated by determining the amount of offset between pixel areas 311 and 312, for example, through image pattern recognition based on techniques, such as for example, comparison of pixel level signal strength. However, the invention is not limited in this respect and an averaged or other moving speed may be estimated or calculated by other means. The estimated moving speed may be compared with a reference speed. A difference between the calculated speed and the reference speed may be used to determine the amount of adjustment of frame transmission rate that imaging device 300 may need to make.

Various processes of control image acquisition, e.g., image capturing, may be schematically illustrated in the following exemplary embodiments of the invention. However, processes and approaches other than those listed below are also covered by the scope of this application. In this application, the terms "acquisition" and "capturing" may be used interchangeably, and the terms "flash" and "illumination" may also be used interchangeably. The rate of image acquisition may be preferably the same as the rate of frame transmission but the invention is not limited in this respect. According to an exemplary embodiment of the invention, an imaging device may not necessarily transmit all the images captured and may send, for example, every other images captured to control frame transmission rate. Therefore, the rate of frame transmission may be less than the rate of image acquisition.

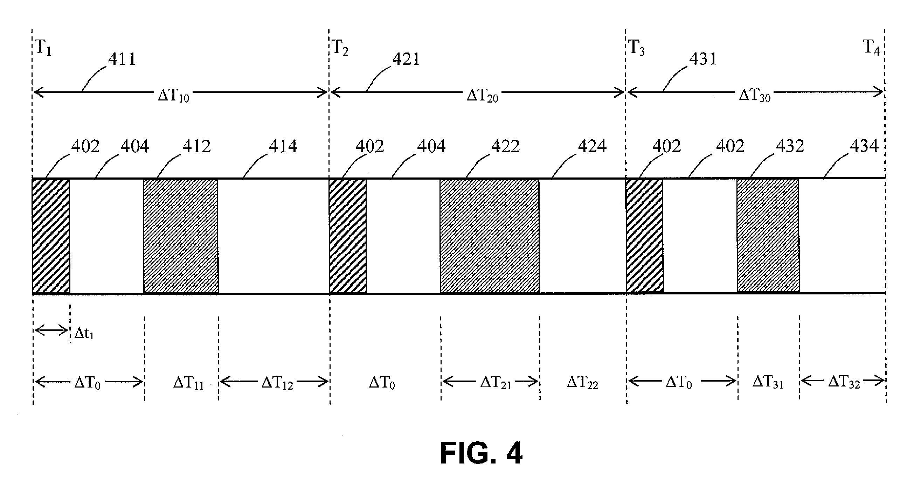

FIG. 4 is a schematic illustration of the timing of an illumination and image acquisition process in an in-vivo imaging device having implemented a frame rate control mechanism according to one embodiment of the invention. The imaging device may use a pre-flash light pulse, which may be for example a light pulse 402 before for example a regular light flash 412, to capture a first control image. The imaging device may subsequently capture a regular image using a regular flash and may apply at least part of the regular image as a second control image. The imaging device may then produce a control signal, which may be for example related to a change in scenery, illumination, changes in the average moving speed of the imaging device or other changes, by processing and analyzing the first and second control images. Furthermore, the imaging device may proceed to apply the control signal to adjust the rate or cycle of image acquisition or imaging and frame transmission or framing. Typically, the control images are not viewed by a user or displayed for a user, where regular images are.

According to one embodiment of the invention, the illumination and image acquisition process may include a series of cycles. For example, a first cycle 411 of duration ΔT₁₀ may start at time T₁ and end at time T₂. A second cycle 421 of duration ΔT₂₀ may start at time T₂ and end at time T₃. A third cycle 431 of duration ΔT₃₀ may start at time T₃ and end at time T₄.

A cycle of illumination and image acquisition may have, for example, four periods. Other number of periods may be used. For example, first cycle 411 may include, for example, a pre-flash illumination period 402 and a following dark period 404 with a combined duration ΔT₀, a regular flash period 412 of duration ΔT₁₁, and a regular dark period 414 of duration ΔT₁₂. Pre-flash illumination period 402 and regular flash period 412 are illustrated in FIG. 4 by hatched bars. Duration ΔT₀ may be preferably fixed but the invention is not limited in this respect. The dark periods after regular flashes, e.g., dark period 414 of duration ΔT₁₂, may be adjusted for frame rate control, as is described below in detail, according to one embodiment of the invention.

The second and third cycles 421 and 431 may have similar pre-flash illumination period 402 and dark period 404 as the first cycle 411. In addition, second cycle 421 may have a regular flash period 422 of duration ΔT₂₁ and a regular dark period 424 of duration ΔT₂₂, both of which may be the same or different from those of first cycle 411. Similarly, third cycle 431 may have a regular flash period 432 of duration ΔT₃₁ and a regular dark period 434 of duration ΔT₃₂, both of which may be the same or different from those of first cycle 411 as well.

During flash periods, for example, pre-flash illumination 402 and/or regular flash 412, light source 44 (FIG. 2) may be turned on to illuminate the GI tract, and one or more control images may be captured. During dark periods (e.g., periods when the light is not operated), for example, dark periods 404 and/or 414, certain pixels of imaging unit 34 (FIG. 2) may be scanned and image signals from the control images captured may be obtained. The image signals may be temporarily stored in a memory or transmitted to the outside of the human body.

During dark period 414, or during any other period, the control image signals may be analyzed, for example, may be compared with each other or with a regular image, to obtain a control signal related to, for example, possible changes in image scenery, the orientation of the imaging device, and/or the average moving speed of the imaging device, although analysis of other factors may also be conducted. The analysis may be performed by an internal processor, for example, processor 36 (FIG. 2) and/or by an external processor, for example, processor 19 which may be an integral part of receiver/transmitter 6 (FIG. 1) or processor 17 (FIG. 1). The control image signals may be transmitted to an external processor along with the regular image signals, or may be sent as a separate frame. A control signal produced internally and/or received from an external processor may be applied to adjust imaging times or cycles, or imaging and/or lighting periods, for example, the rate or cycles of image acquisition or imaging and frame transmission or framing, so that for example more images may be captured when the rate of image changes increases, or the imaging device moves faster. Framing may include, for example, transmitting an image. The cycles may be adjusted through, for example, controlling the starting time of a subsequent cycle, for example starting time T₂ of second cycle 421. For example, dark period 414 may be adjusted to control the rate or cycles of imaging and framing.

According to one embodiment of the invention, adjustment of cycles may be implemented starting at a subsequent cycle, for example, third cycle 431, instead of during the immediate cycle 421.

According to another embodiment of the invention, the image frame acquisition and/or transmission rate may also be lowered, reduced, or shortened by selectively transmitting captured images and skipping transmission of certain other images without adjusting the cycle of imaging.

Pre-flash light pulse 402 may have duration of Δt₁. A first control image may be captured during pre-flash illumination, and scanned into a first control image signal, for example, during dark period 404. The image may be scanned from a group of pixels which may be, for example, a subset of pixels of imager or imaging unit 34 (FIG. 2). Pixels of the imager may be reset during dark period 404. A regular image may be captured after regular flash period 412 and scanned into a regular image signal, for example, during dark period 414. The first control image signal and the regular image signal may be transmitted to, for example, external receiver/transmitter 6. Processor 19 of external receiver/transmitter 6 (or processor 17 of workstation 8) may extract a second control image signal ("redacted image signal") from the regular image signal associated with, for example, the subset of pixels for the first control image signal. Alternatively, the second control image signal may be extracted by internal processor 36 of device 30 (FIG. 2). The second control image signal may be compared with the first control image signal and a rate of change in image position or image scenery, corresponding to an averaged speed of the imaging device relative to, for example, the scenery change, may be estimated or calculated. According to one embodiment of the invention, control image signals may be normalized in power for proper signal processing.

It will be appreciated by person skilled in the art that the first and second control images may be captured from different cycles of image acquisition and frame transmission. For example, the first control image may be captured during pre-flash illumination 402 of cycle 411 and the second control image may be captured during regular flash 422 of cycle 421.

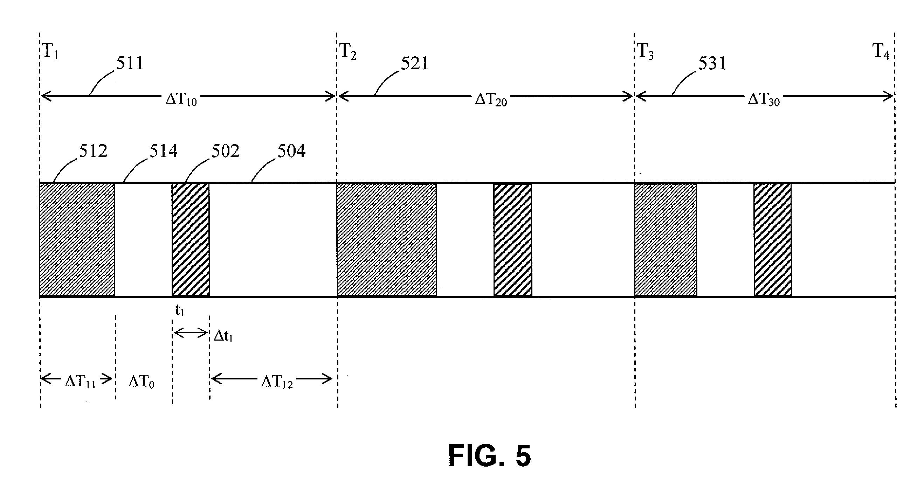

FIG. 5 is a schematic illustration of the timing of an illumination and image acquisition process in an in-vivo imaging device having implemented a frame rate control mechanism according to another embodiment of the invention.

The imaging device may capture a regular image after a regular flash and at least part of the regular image may be applied as a first control image. The imaging device may apply a post-flash light pulse, which is for example a light pulse 502 after for example a regular flash 512, to capture a second control image. The imaging device may scan the first and second control images to obtain a first and second image signals, and process the image signals to obtain a control signal. The control signal may reflect for example a change in the orientation or average moving speed of the imaging device, and may be used to adjust the imaging cycles, acquisition and imaging, and frame transmission or framing. Typically, the control images are not viewed by a user or displayed for a user, where regular images are.

According to one embodiment of the invention, the illumination and image acquisition process may include a series of cycles. For example, a first cycle 511 may start at time T₁ and end at time T₂ with a duration ΔT₁₀. A second cycle 521 may start at time T₂ and end at time T₃ with a duration ΔT₂₀. A third cycle 531 may start at time T₃ and end at time T₄ with a duration ΔT₃₀.

A cycle of image acquisition and processing may have for example four periods; other numbers of periods may also be used. For example, first cycle 511 may include a regular flash period 512 of duration ΔT₁₁, a regular dark period 514 of duration ΔT₀, and a post-flash illumination period 502 and a following dark period 504, having a combined duration ΔT₁₂. Regular flash period 512 and post-flash illumination period 502 are illustrated in FIG. 5 by hatched bars. Duration ΔT₀ may be preferably fixed but the invention is not limited in this respect. Post-flash illumination period 502 may start at a time t₁. According to one embodiment of the invention, the dark periods after post-flash illumination, e.g., dark period 504 of duration ΔT₁₂, may be adjusted for frame rate control, as described below in detail.

As similarly described above in FIG. 4, during regular flash 512 and post-flash illumination 502, control images may be captured. During dark periods 514 and 504, at least a subset of pixels of imaging unit 34 (FIG. 2) may be scanned to obtain a set of control image signals from the control images captured. The pixels may be re-set during dark periods 514 and 504. The set of image signals may be processed or analyzed, for example, by an internal processor 36 (FIG. 2) and/or by an external receiver/transmitter 6 (FIG. 1) and/or processor 17 (FIG. 1), to produce for example a control signal or adjustment parameter. According to one embodiment of the invention, the image signals may be transmitted to an external processor along with the regular image signals, or may be sent as a separate frame. The control signal produced internally or received externally may be applied to adjust the period or cycle of imaging, for example, timing or cycles of image acquisition or imaging and frame transmission or framing. The periods or cycles may be adjusted through controlling, for example, the starting time T₂ of second cycle 521. For example, dark period 504 of duration ΔT₁₂ may be adjusted to control the rate or cycles of imaging, lighting, and/or framing.

According to one embodiment of the invention, the cycles of framing may also be lowered by selectively transmitting some captured images and skipping some other images without adjusting the cycle of imaging. According to another embodiment of the invention, adjustment may be made by adjusting the starting time of other subsequent cycles, such as cycle 531.

A regular image signal may be obtained by scanning an image captured after regular flash period 512. According to one embodiment, the regular image signal may be transmitted to, for example, external receiver/transmitter 6 and processed by processor 19 (or processor 17 of workstation 8) to obtain a first control image signal ("redacted image signal"). According to another embodiment, the first control image signal may be obtained by internal processor 36 of device 30 (FIG. 2). The first control image signal may be extracted from a subset of pixels of imager 34. A second control image may be captured during post-flash illumination 502, and scanned into a second control image signal, for example, during dark period 504. Post-flash light pulse 502 may have duration of Δt₁. The second control image signal may be compared with the first control image signal, and factors such as, for example, a rate of image scenery change, and/or change in image position corresponding to an averaged speed of the imaging device, may be estimated or calculated. According to one embodiment of the invention, the first and second control image signals may be normalized in power for proper signal processing and comparison to produce a control signal. The control signal may, for example, increase or decrease the rate of image acquisition or imaging or frame transmission or framing, or to lower frame transmission rate by skipping certain images captured while keeping the image acquisition rate constant relative to the rate of image changes. For example, more images may be captured when the rate of image changes increases, an indicator of some drastic condition change in the GI tract.

According to one embodiment of the invention, the first and second control images may be captured from different cycles of image acquisition and frame transmission. For example, the first control image may be captured during regular flash 512 of cycle 511 and the second control image may be captured from cycle 521 or any subsequent cycles. Two or more control images may be captured to produce one or more control signals to control the operational characteristics of the imaging device.

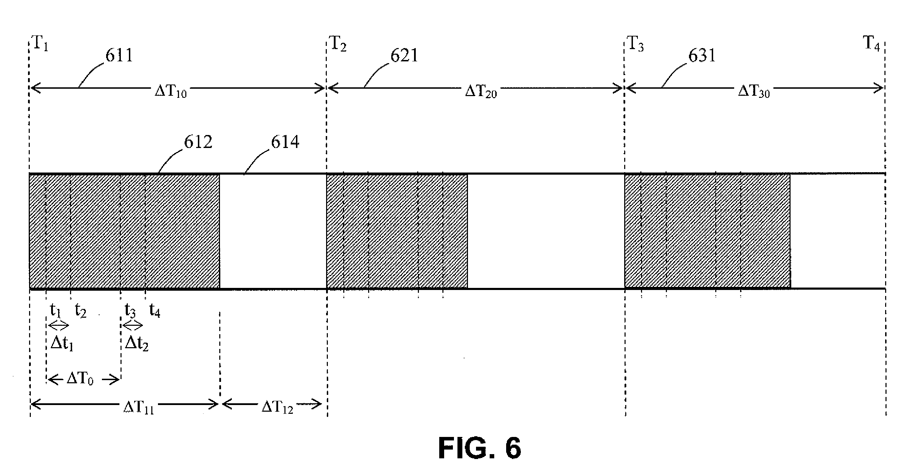

FIG. 6 is a schematic illustration of the timing of an illumination and image acquisition process in an in-vivo imaging device having implemented a frame rate control mechanism according to yet another embodiment of the invention. The imaging device may not require extra flashes other than the regular flashes, and may obtain a set of control images through, for example, multiple scanning of the imaging sensor during a regular flash period. Image signals scanned from control images captured may be processed and/or analyzed to adjust the rate or cycles of image acquisition or imaging and frame transmission or framing.

According to an exemplary embodiment of the invention, the illumination and image acquisition process may include a series of cycles or periods. For example, a first cycle 611 may start at time T₁ and end at time T₂ with a duration ΔT₁₀. A second cycle 621 may start at time T₂ and end at time T₃ with a duration ΔT₂₀. A third cycle 631 may start at time T₃ and end at time T₄ with a duration ΔT₃₀.

A cycle of image acquisition and processing may have a regular flash period and a regular dark period. For example, first cycle 611 may have a flash period 612 of a duration ΔT₁₁, and a dark period 614 (e.g., when no illumination is used) of a duration ΔT₁₂. Flash period 612 is represented by the hatched bar in FIG. 6. Dark period 614 of duration ΔT₁₂ may be adjusted for frame rate control, as is described below in detail, according to an exemplary embodiment of the invention.

According to one embodiment of the invention, during flash period 612, the imaging device, for example, device 30 (FIG. 2), may scan and store, record, at time t₁, a first group of image data, and scan and store, record, at time t₂, a second group of image data. A difference in scanned signal strength, during a time interval Δt₁ between t₁ and t₂, may be applied as a first control image signal. Subsequently, the imaging device may scan and store, record, at time t₃, a third group of image data, and scan and store, record, at time t₄, a fourth group of image data. A difference in scanned signal strength, during a time interval Δt₂ between t₃ and t₄, may be applied as a second control image signal. It will be appreciated by a person skilled in the art that the imaging device may scan at three different times to obtain three groups of image data. Differences in signal strength between any two groups of image data may be used as the first and second control image signals.

The first and second image signals may also be stored in a memory to be processed and/or transmitted to an external processor for processing later, for example, during dark period 614. According to one embodiment of the invention, the time difference between t₁ and t₃ of duration ΔT₀ may be pre-determined but the invention is not limited in this respect. The time interval between t₁ and t₃ may be adjusted within flash period 612.

During dark period 614, or a part thereof, first and second image signals obtained from time intervals Δt₁ and Δt₂ may be processed by processor 36, processor 19 (FIG. 2), and/or transmitted to an external processor for processing. A possible change in the image data, or moving speed of the imaging device may be estimated or calculated, and used to determine the rate or cycle adjustment to image acquisition or imaging and frame transmission or framing. The rate or cycle adjustment may be made through controlling the starting time T₂ of second cycle 621, or any subsequent cycles. The pixels of imaging unit 34 may be re-set during dark period 614.

According to one embodiment of the invention, time durations of Δt₁ and Δt₂ may be adjusted based on a desired sharpness of images and intensity of illumination during image acquisition. In addition, signals scanned from control images captured during Δt₁ and Δt₂ may need normalization in power for proper signal processing.

In the embodiments of the invention shown in FIGS. 4, 5, and 6 above, and other embodiments of the invention, when a reduction in frame transmission rate is desired, instead of reducing the rate of image acquisition, the imaging device may keep the same rate of image acquisition or imaging. Instead, the imaging device may transmit frames of images at a lower transmission rate by selectively transmitting images and skipping certain other images captured according to exemplary embodiments of the invention.

FIGS. 7A and 7B are schematic top views of a group of pixels of an imaging unit having implemented a frame rate control mechanism according to one embodiment of the invention. In FIG. 7A, pixel group 700, which may be for example part of imaging unit 34 in FIG. 2, is schematically illustrated by a 15X18 pixel array. However, it will be appreciated by persons skilled in the art that the number of pixels may be larger or smaller depending on various factors, for example, the time interval between the two images sampled, and the expected average moving speed of the imaging device, etc.

According to one embodiment of the invention, pixels that are sampled or scanned for acquiring control images may be specially fabricated pixels and may be, for example, analog photodiodes with special readout such as parallel access or sampling circuitry. Such pixels may be advantageous because of shortened readout of scanning results, compared with the time required to sequentially scan the same number of pixels in an imaging sensor, for example, a CMOS imager, having uniform pixel construction.

A first set of image pixel outputs may be recorded which may include, for example, an image represented by pixels 711-716. After a pre-determined time interval, a second set of pixel outputs may be recorded. By analyzing the second pixel outputs, the image represented by pixels 711-716 may be identified to have moved to a position represented by pixels 721-726. For example, a distance moved by the imaging device may be represented by a pixel movement indicating a pixel "distance" of 4 vertical and 3 horizontal, or a linear distance of 5 pixels. Since the movement of the image happened during the pre-determined time interval, a rate of device movement may be computed and may be used to adjust the rate of imaging acquisition and frame transmission.

Since the intensity of flashing and the duration of illumination may be different for the two imaging operations, the intensity of signals or data produced by the pixel group may be different. To facilitate pattern recognition and processing, the signals may be amplified and/or attenuated to have comparable intensity or may be normalized during processing by software.

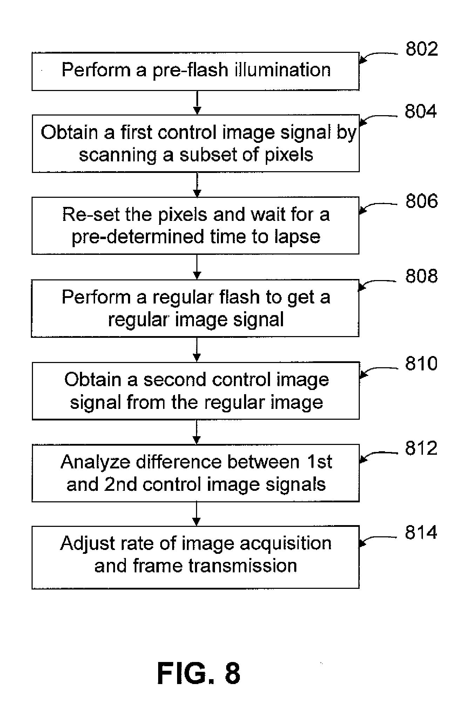

FIG. 8 is a simplified flowchart illustration of a method of performing frame rate control by an in-vivo imaging device with pre-flash control image sampling according to one exemplary embodiment of the invention.

At block 802, the imaging device, for example, imaging device 30 (FIG. 2), may perform a pre-flash illumination for acquisition of a first control image. Following the pre-flash illumination, at block 804, the imaging device may scan a set of pre-selected pixels of an imaging sensor or unit 34 of the imaging device 30, and obtain a first control image signal. The imaging device 30 may then reset the pixels and wait for a pre-determined time to lapse as indicated at block 806. At block 808, the imaging device 30 may proceed to perform a regular flash and, after the regular flash, scan the pixels to obtain a regular image. A second control image signal (also referred to herein as a redacted image signal) may be extracted or sampled from the regular image obtained, possibly from the corresponding set of pre-selected pixels for the first control image, as indicated at block 810. The extraction or sampling may be performed by an internal processor 36 of imaging device 30 and/or an external processor, for example, processor 19 and/or processor 17 (FIG. 1). At block 812, the first and second control image signals may be analyzed, and may be compared. In one example, an averaged moving speed relative to the scenery change of the GI tract, may be computed. The analyzing and computing process may include normalizing power of captured control image signals and may include, as described above, transmitting the control image signals to external receiver/transmitter 6, and subsequently receiving a control signal from the external receiver/transmitter 6. The control images may also be analyzed internally by processor 36 (FIG. 2) to produce the control signal. As indicated at block 814, the rate of image acquisition and frame transmission of the imaging device may be adjusted by the rate control signal.

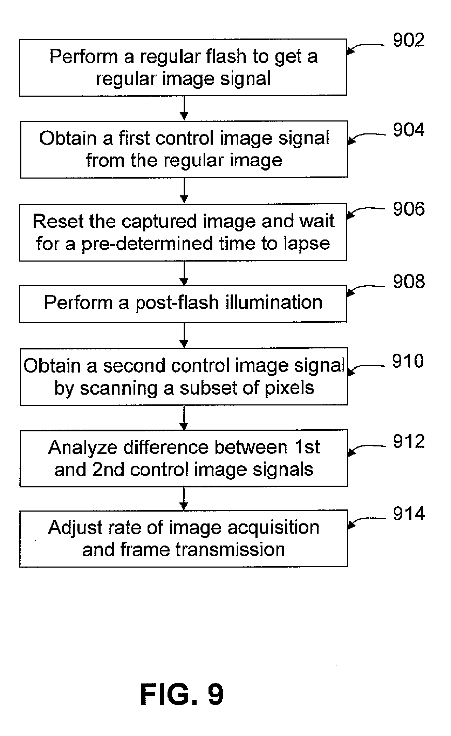

Fig. 9 is a simplified flowchart illustration of a method of performing frame rate control by an in-vivo imaging device with post-flash control image sampling, according to another exemplary embodiment of the invention.

The imaging device, e.g., imaging device 30 (FIG. 2), may perform a regular flash for the acquisition of a regular image at block 902. After the regular flash, the imaging device may scan the pixels to get the regular image signal. A first control image signal (also referred to herein as a redacted image signal) may be extracted or sampled from the regular image signal, from a set of pre-selected pixels of imaging unit or sensor 34 of imaging device 30, as indicated at block 904. At block 906, the imaging device may reset the pixels and wait for a pre-determined time to lapse. The imaging device may proceed to perform a post-flash illumination at block 908. Following the post-flash illumination and at block 910, the imaging device may scan, for example, the corresponding set of pre-selected pixels to obtain a second control image signal. At block 912, the first and second control image signals may be analyzed and factors such as, for example, an averaged moving speed, relative to image scenery change of the GI tract, may be computed. The process of analyzing and computing may include normalizing power of captured control image signals and may include, as described above, transmitting the control images to external receiver/transmitter 6 for analysis, and subsequently receiving a control signal from external receiver/transmitter 6. The control image signals may also be analyzed internally by processor 36 (FIG. 2) to produce the control signal. As indicated at block 914, the rate of image acquisition and frame transmission of the imaging device may be adjusted by the control signal.

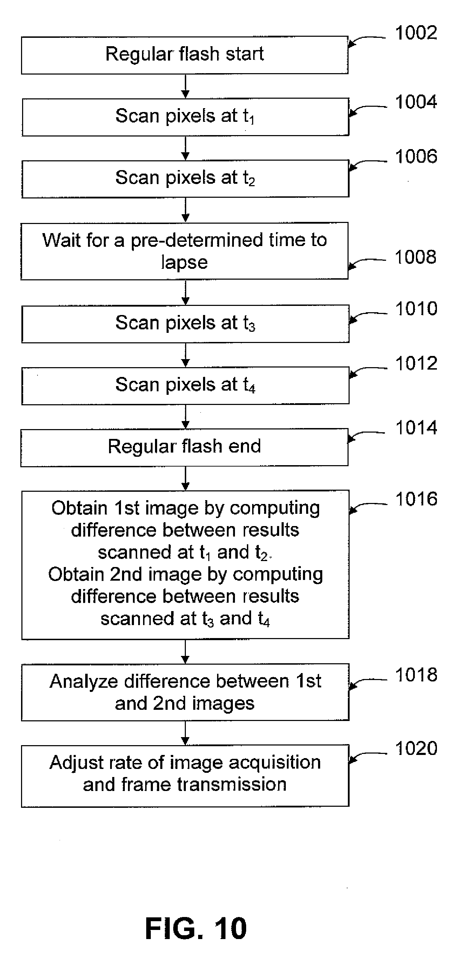

FIG. 10 is a simplified flowchart illustration of a method of performing frame rate control by an in-vivo imaging device, according to a further exemplary embodiment of the invention.

The imaging device may perform a regular flash for image acquisition at block 1002. During the regular flash, the imaging device may scan, at time t₁, a pre-selected set of pixels of an imaging sensor of the imaging device and save the results at block 1004. The imaging device may scan, at time t₂, the same set of pixels and save the results at block 1006. The imaging device may wait for a pre-determined time to lapse at block 1008. The imaging device may scan, at time t₃, the same set of pixels and save the results at block 1010. The imaging device may scan, at time t₄, the same set of pixels and save the results at block 1012. The regular flash may end at block 1014. At block 1016, a difference in results obtained at times t₁ and t₂ may be computed and saved as a first control image. Similarly, a difference in results obtained at times t₃ and t₄ may be computed and saved as a second control image. However, the above computation in difference of results may be performed before the regular flash ends. At block 1018, the first and second control images may be processed. The processing may include normalizing power of captured control images, transmitting the control images to an external receiver for analysis, and receiving a rate control signal from the external receiver. However, the invention is not limited in this respect and the control images may be analyzed internally by processor 36 (FIG. 2) to produce the rate control signal. At block 1020, the rate of image acquisition and frame transmission of the imaging device may be adjusted by the rate control signal.

In further embodiments, other operations, and other series of operations, may be used.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

It will be appreciated by those skilled in the art that while the invention has been described with respect to a limited number of embodiments, many variations, modifications and other applications of the invention may be made which are within the scope of the invention.

## Claims

1. An in-vivo imaging system comprising:
an in-vivo imaging device comprising a light source and an imager; and
a processor to produce a control signal, said control signal produced based on two or more images captured by the imager, and to use the control signal to adjust a rate of image capturing by the imager.

2. The in-vivo imaging system of claim 1, further comprising an external unit to receive at least two images from the in-vivo imaging device.

3. The in-vivo imaging system of claim 2, wherein the external unit is to transmit the produced control signal to the in-vivo imaging device to adjust the rate of image capturing of the imager.

4. The in-vivo imaging system of any preceding claim, wherein the in-vivo imaging device comprises a transmitter/receiver to transmit the images and to receive the control signal.

5. The in-vivo imaging system of any preceding claim, comprising a processor to produce a flash period before or after a regular imaging period.

6. The in-vivo imaging system of any preceding claim, wherein the imager comprises readout and sampling circuitries adapted for parallel access to a subset of pixels.

7. The in-vivo imaging system of any preceding claim wherein the imaging device comprises a capsule shaped device body wherein the light source and imager are contained within the device body.

8. A method for operating an in-vivo imaging system, the method comprising:
capturing at least two images of a body lumen;
producing a control signal based on two or more images; and
adjusting an image capturing cycle based on the control signal.

9. The method of claim 8, comprising receiving at least two of the images from an in-vivo autonomous imaging device.

10. The method of claim 8 or 9, comprising producing the control signal in a unit external to a patient's body.

11. The method of claim 10, comprising transmitting the control signal to the in-vivo autonomous imaging device to adjust a rate of image capturing of the in-vivo autonomous imaging device.

12. The method of claim 11, wherein adjusting the rate of image capturing comprises controlling a starting time of the image capturing cycle or selectively transmitting captured images.

13. The method of claim 9 or any one of claims 10 to 12 depending from claim 9, comprising storing a first image in the in-vivo autonomous imaging device and then transmitting the stored first image and a second image together to a unit external to a patient's body.

14. The method of any one of claims 8 to 13, comprising obtaining at least one image by redacting a regular image captured during a regular imaging period or by scanning a subset of pixels.

15. The method of any one of claims 8 to 14, comprising obtaining at least one image in a flash period performed before or after a regular imaging period.

16. The method of any one of claims 8 to 15, comprising producing the control signal based on a rate of scenery change between at least two of the images averaged over a time interval between the two images.

17. The method of claim 9 or any one of claims 10 to 16 depending from claim 9, comprising producing the control signal internally in the in-vivo autonomous imaging device.
